# EUROPÄISCHE PATENTANMELDUNG

(11) **EP 2 000 407 A2**
(43) Veröffentlichungstag der Anmeldung: **10.12.2008**
(21) Anmeldenummer: 08009756.1
(22) Anmeldetag: 29.05.2008
(51) Int. Cl.: B64G 1/22

(54) **Selbst verriegelnde Gelenkvorrichtung**

(30) Priorität: 05.06.2007 DE 102007026452
(71) Anmelder: HTS Hochtechnologie Systeme GmbH, 01640 Coswig (DE)
(72) Erfinder: Seifart, Klaus, Dr.-Ing., 01640 Coswig (DE); Schmidt, Tilo, Dipl.-Ing., 01640 Coswig (DE)
(74) Vertreter: Schmidt, Ursula

(57) **Zusammenfassung**

Die Erfindung betrifft eine selbst verriegelnde Gelenkvorrichtung, bestehend aus abstandsweise zueinander ausgebildeten Befestigungselementen, die mit dazwischen angeordneten streifenförmigen Federelementen verbunden sind, wobei in der Ausgangsstellung die Federelemente aus der Vertikalen oder Horizontalen abgebogen sind und in Endstellung gestreckt ausgebildet sind.

Die erfindungsgemäße Aufgabe, die darin besteht, eine reibungsfreie und platzsparende Gelenkvorrichtung zu schaffen, wird dadurch gelöst, dass zwischen den Befestigungselementen (1, 2) zwei streifenförmige Federelemente (3, 4) unterschiedlicher Länge abstandsweise parallel gegenüberliegend, wenigstens ein Führungsteil (5) zur Führung und seitlichen Fixierung des längeren Federelementes (3) in eine S-förmig abgebogene Ausgangsstellung und zur Befestigung und Abstandsüberbrückung für das kürzere Federelement (4) angeordnet sind.

## Beschreibung

Die Erfindung betrifft eine selbst verriegelnde Gelenkvorrichtung, bestehend aus abstandsweise zueinander ausgebildeten Befestigungselementen, die mit dazwischen angeordneten streifenförmigen Federelementen verbunden sind, wobei in der Ausgangsstellung die Federelemente aus der Vertikalen oder Horizontalen abgebogen sind und in Endstellung gestreckt ausgebildet sind.

Die selbst verriegelnde Gelenkvorrichtung dient insbesondere dem Einsatz in der Raumfahrttechnik zum Entfalten verschiedener Strukturelemente wie Sonnensegel, Antennen, Solargeneratoren und Maste, an denen beispielsweise Kameras befestigt sind.

Im Wesentlichen sind Gelenktypen mit und ohne elektrischen Energieverbrauch bekannt, die zum Entfalten verschiedener Strukturelemente in der Raumfahrttechnik eingesetzt werden.

Dazu zählen elektrisch angetriebene Gelenke, die über Schrittmotore und Getriebe in ihre Endlage versetzt und dort gehalten, also in den senkrechten oder waagerechten Zustand verfahren werden, um beispielsweise ein Sonnensegel oder eine Kamera auszufahren und in die richtige Position zu verbringen. Die Gelenke werden in ihrer Endlage durch einen gesonderten Arretierungsmechanismus in dieser Position gehalten.

Nachteilig ist, dass diese Stellmotoreneinrichtungen einen erhöhten technischen Aufwand beispielsweise für Energieversorgung und Steuerung nach sich ziehen. Aufgrund der Reibung zwischen verschiedenen Bauteilen müssen diese Gelenkantriebe überdimensioniert werden, um mit Sicherheit die Funktion der Gelenkvorrichtung zu gewährleisten.

Oftmals müssen elektrische Stellmotoreneinrichtung beheizt werden, was jedoch insgesamt durch den erhöhten Bedarf an elektrischer Energie den technischen Aufwand für solche Gelenkvorrichtungen erhöht. Auch die Gelenkvorrichtungen benötigen elektrische Energie und die Genauigkeit der erreichten Endposition bei Entfaltung reicht für viele Anwendungen nicht aus. Die Überdimensionierung aufgrund von Reibung zwischen den Bauteilen der Gelenkvorrichtung ist ebenfalls notwendig.

Zu den nicht elektrisch angetriebenen Gelenkvorrichtungen zählen solche, welche aus einem scharnierartigen Gelenk bestehen, das mit einer metallischen elastischen Feder zur Entfaltung angetrieben wird. Nachteilig ist hier, dass aufgrund der Reibung zwischen den Bauteilen die Gelenke überdimensioniert werden müssen, um unter den thermalen Bedingungen im Weltraum die Funktion zu gewährleisten.

Bekannt sind des Weiteren Gelenkvorrichtungen, deren elastische Federelemente aus Werkstoffen mit Memory-Effekt bestehen. Auch diese Gelenkvorrichtungen sind unzuverlässig unter den gegebenen Einsatzbedingungen im Weltall. Die notwendige Überdimensionierung derartiger Gelenkvorrichtungen ist ebenfalls nachteilig.

Offenbar geworden sind auch Gelenkvorrichtungen, bei denen die beweglichen Enden durch elastische Federelemente verbunden werden. Diese elastischen Federelemente sind Streifen mit gekrümmtem Querschnitt. Durch die Form der Streifen stellt sich im ausgefahrenen Zustand eine selbsttätige Verriegelung ein. Derartige Gelenkvorrichtungen sind beispielsweise in der Patentschrift US 3,386,128 offengelegt.

Diese Druckschrift beschreibt, dass auch elastische Elemente in größerer Anzahl verwendet und in Gruppen angeordnet werden können. Dazu werden elastische Elemente nebeneinander angeordnet, wobei jedes zweite Element in einem gewissen Abstand bezogen auf die Dickenebene der elastischen Verbindungselemente angeordnet wird. Beim Einklappen des Gelenkes in Ausgangsposition werden die elastischen Elemente aneinander vorbei geführt, um die Reibung zu verhindern.

Das von der Gelenkvorrichtung zur Verfügung gestellte Antriebsmoment ist dabei im Wesentlichen von der Anzahl, der speziellen Form und dem verwendeten Material der Federelemente abhängig. Um ein möglichst großes Antriebsmoment pro Volumen zu erzeugen, müssen die gekrümmten Federelemente möglichst dicht nebeneinander angeordnet sein. Zum Erreichen einer großen Torsionssteifigkeit der Gelenkvorrichtungen im Endzustand müssen die Befestigungsebenen möglichst weit voneinander entfernt sein.

Nachteilig ist, dass - bedingt durch das aneinander vorbei Biegen der elastischen Federelemente - ein verhältnismäßig großer lateraler Bauraum benötigt wird.

Beim Biegen der an beiden Enden an Interface-Elementen befestigten Federelemente stellt sich im mittleren Bereich eine Verflachung des sonst gekrümmten Querschnittes ein, die zu den Befestigungsenden hin wieder abnimmt. Durch diese Verflachung des Federelementprofils im zusammengeklappten Zustand wird die Drehsteifigkeit des Gelenkes stark herabgesetzt.

Es ist deshalb Aufgabe der Erfindung, ein selbst verriegelndes Gelenk der eingangs beschriebenen Art so weiterzubilden, dass es reibungsfrei und platzsparend ausgebildet, ein hohes Antriebsmoment und eine große Steifigkeit aufweist.

Erfindungsgemäß wird die Aufgabe dadurch gelöst, dass zwischen den Befestigungselementen zwei streifenförmige Federelemente unterschiedlicher Länge abstandsweise parallel gegenüberliegend und wenigstens ein Führungsteil zur Führung und seitlichen Fixierung des längeren Federelementes (3) in eine S-förmig abgebogene Ausgangsstellung und zur Befestigung und Abstandsüberbrückung für das kürzere Federelement angeordnet sind.

Mit dieser erfindungsgemäßen selbst verriegelnder Gelenkvorrichtung wird ein reibungsfreies und sich selbst entfaltendes Gelenk geschaffen, wobei diese Eigenschaften durch die parallele Anordnung eines kurzen und eines langen Federelementes erzielt werden. Das kurze Element erwirkt eine hohe Biegesteifigkeit und ist maßgeblich für ein hohes Antriebsmoment. Das lange Federelement ist so dimensioniert, dass der notwendige Ausfahrweg gewährleistet wird.

Dadurch, dass sich die Federelemente während des gesamten Ausfaltvorganges nicht berühren, kann keine Reibung zwischen den Federelementen entstehen.

Die reibungsfreie, sich direkt gegenüberliegende Anordnung der Federelemente trägt außerdem zu einer platzsparenden Konfiguration bei.

Von Vorteil ist auch, dass die Kontrolle über den Bewegungsablauf durch eine Reduzierung der Verdrehbarkeit der beweglichen Elemente zueinander während des Ausklappens erhöht wird.

Der Abstand zwischen dem kurzen und dem langen Federelement wird durch das Führungsteil überbrückt, das außerdem dem Durchtauchen des langen Federelementes unter dem kurzen Federelement durch einen Durchgang im Führungsteil dient und dafür sorgt, dass das lange Federelement im Ausgangszustand Zustand seitlich nicht wegkippen kann.

Konstruktiv von Vorteil ist, wenn zur weiteren Abstandsüberbrückung für das kürzere Federelement (4) ein Befestigungsteil (6) am oberen Befestigungselement (1) angeordnet ist.

Dadurch ist eine variable Anordnung des kürzeren Federelementes je nach den vorhandenen Gegebenheiten gewährleist.

Nach einer vorteilhaften Ausbildung der erfindungsgemäßen selbst verriegelnden Gelenkvorrichtung sind zwischen den Befestigungselementen wenigstens zwei Federelementpaare mit zugehörigem Führungsteil und Befestigungsteil aneinandergereiht angeordnet.

Damit erhöhen sich die Biegesteifigkeit und das Antriebsmoment.

Insbesondere für die Weltraumanwendung ist es von Vorteil, leichte Werkstoffe einzusetzen. Daher ist erfindungsgemäß vorgesehen, die Federelemente aus einem Kohlefaserwerkstoff herzustellen.

Das vorzugsweise Einsatzgebiet der erfindungsgemäßen Gelenkvorrichtung ist die Raumfahrttechnik, um Satellitenstrukturen entfalten und in der entfalteten Position dauerhaft und mit hoher Genauigkeit ausrichten zu können.

Nach einer weiteren vorzugsweisen Ausführungsform der erfindungsgemäßen Lösung ist vorgesehen, dass im Ausgangszustand das lange Federelement beim Abbiegen unter dem kurzen Federelement zwischen den Führungsplatten des Führungsteils in die S-förmige Doppelbiegung geformt und das kurze Federelement um circa 90° abgebogen ist.

Damit wird ein Berühren der beiden Federelemente sicher verhindert.

Von Vorteil ist des Weiteren, wenn die streifenförmigen Federelemente einen gekrümmten Querschnitt aufweisen.

Damit erhöht sich die Biegesteifigkeit der Federelemente.

Nach einer anderen Ausführungsform weist das lange streifenförmige Federelement wenigstens in einem vorgegebenen Abschnitt einen geringeren Querschnitt in Form einer Taillierung auf.

Durch die Taillierung wird in diesem Bereich die Biegesteifigkeit verringert. Dadurch wird erreicht, dass das Abbiegen des Federelementes so beeinflusst wird, dass die Biegung in einem vorgegebenen Bereich zwischen den Führungsplatten ausgeführt werden kann.

Wenn die Federelemente mit einer viskoelastischen Schicht versehen sind, kann eine Dämpfung beim Streckvorgang der Federelemente erreicht werden, um so eine hochfrequente Schallwelle im All zu verhindern, die möglicher Weise Schäden am Satelliten verursachen könnte.

Die Erfindung soll nachfolgend anhand eines Ausführungsbeispieles näher erläutert werden. Die zugehörige Zeichnung zeigt dabei in
- Fig. 1: eine selbst verriegelnde Gelenkvorrichtung im Endzustand als prinzipielle Darstellung,
- Fig.2: die Gelenkvorrichtung nach Fig.1 im Ausgangszustand,
- Fig.3: eine Gelenkeinheit, bei der mehrere Gelenkvorrichtungen aneinander gekoppelt sind, im Endzustand als prinzipielle Darstellung,
- Fig.4: die Gelenkeinheit nach Fig.3 im Ausgangszustand,
- Fig.5: ein langes, streifenförmiges Federelement mit Taillierung in prinzipieller Darstellung und
- Fig. 6: das Federelement nach Fig. 5 im Ausgangszustand

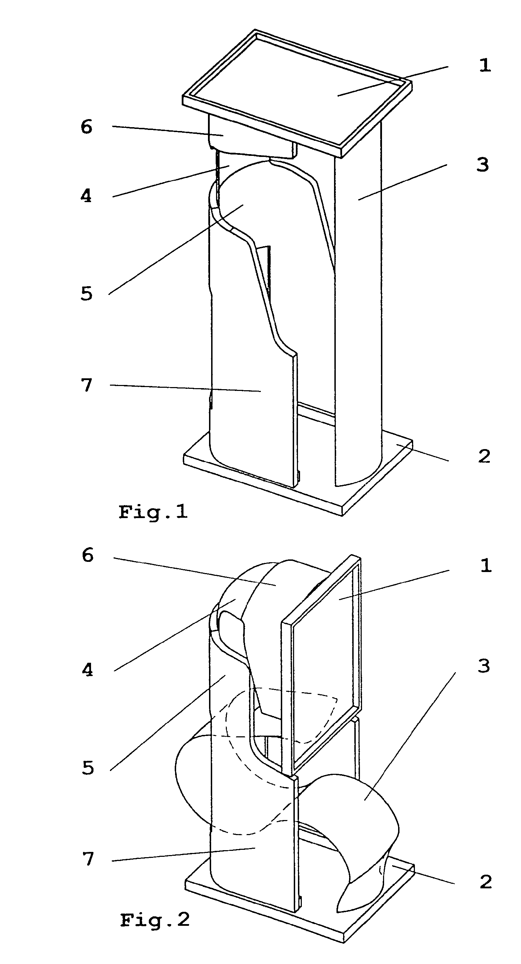

Nach den Fig. 1 und 2 besteht die selbst verriegelnde Gelenkvorrichtung im Wesentlichen aus einem oberen und einem unteren Befestigungselement 1, 2, einem langen und einem kurzen streifenförmigen Federelement 3, 4, einem Führungsteil 5 und einem Befestigungsteil 6.

Das lange streifenförmige Federelement 3 ist direkt mit den beiden Befestigungselementen 1, 2 verbunden, während das kurze streifenförmige Federelement 4 am Befestigungsteil 6 1 und am Führungsteil 5, die der Abstandsüberbrückung zwischen oberem und unterem Befestigungsteil 1, 2 dienen, befestigt ist.

Das Führungsteil 5 ist am unteren Befestigungselement 2 befestigt, ist im Wesentlichen als dünnwandiges, offenes Profil mit U- oder kanalförmigen Querschnitt ausgebildet und weist zwei seitlich der Federelemente 3, 4 angeordnete Führungsplatten 7 auf. Die dem langen Federelement 3 zugewandte Seite ist offen, während die gegenüberliegende Seite mit einem Durchgang 8 versehen ist.

Die Federelemente 3, 4 sind abstandsweise direkt gegenüberliegend angeordnet, sind aus einem Kohlefaserwerkstoff hergestellt und weisen einen halbkreisartigen, gekrümmten Querschnitt auf, wobei die Krümmung zueinander gerichtet ist.

Fig. 2 zeigt die selbst verriegelnde Gelenkvorrichtung im Ausgangszustand, als platzsparendes Teil während des Transportes in den Weltraum. Das obere Befestigungselement 1 ist in Richtung des langen Federelementes 3 abgebogen. Das kurze Federelement 4 ist oberhalb des Führungsteils 5 um circa 90° abgebogen. Das an der gegenüberliegenden Seite des oberen Befestigungselementes 1 befestigte lange Federelement 3 wird S-förmig zwischen die seitlichen Führungsplatten 7 und durch den Durchgang 8 gebogen, so dass die Länge des Federelementes 3 bzw. die Größe der Gelenkvorrichtung wesentlich reduziert werden kann.

Durch eine in der Zeichnung nicht dargestellte Halte- und Lösevorrichtung wird die Gelenkvorrichtung in seiner Ausgangslage fixiert.

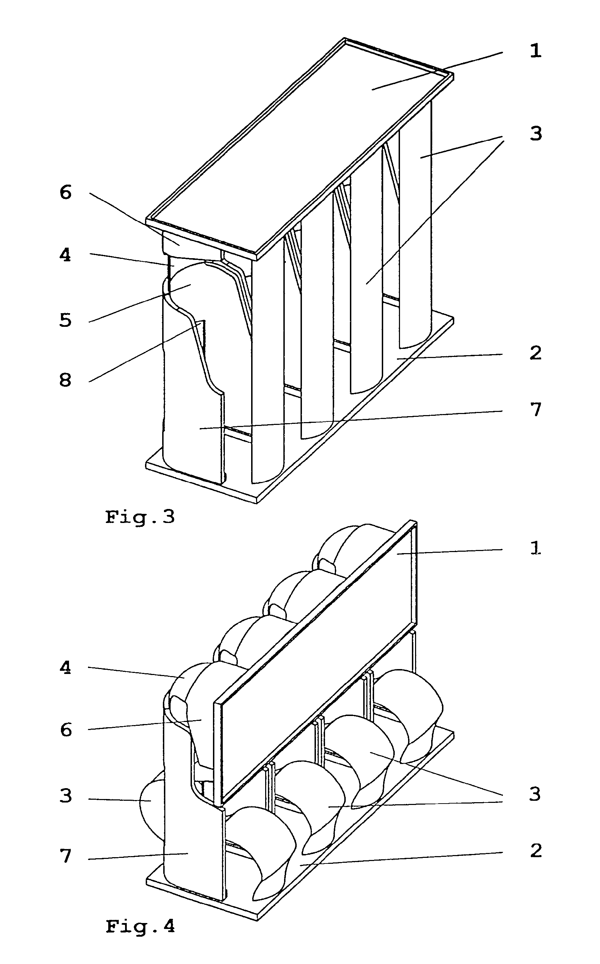

Die Fig. 3 und 4 zeigen ein weiteres Ausführungsbeispiel der selbst verriegelnden Gelenkvorrichtung. Hiernach sind mehrere der vorher beschriebenen Gelenkvorrichtung zu einer Gelenkeinheit verbunden. Zwischen den Befestigungselementen 1, 2 sind jeweils ein Paar Federelemente 3, 4 mit zugehörigem Führungsteil 5 und Befestigungsteil 6 angeordnet. In Ausgangsstellung werden die Federelementpaare 3, 4 gleichzeitig in S-Form gebogen und gehalten. Vor Ort werden sie ebenfalls gleichzeitig durch Lösen der Halte- und Lösevorrichtung in ihre Endstellung im gestreckten Zustand verbracht.

Die Anzahl der zusammenzufügenden Gelenkvorrichtungen und die dadurch erzeugte Antriebskraft sind abhängig vom benötigten Antriebsmoment und den Steifigkeitsanforderungen in der Endlage.

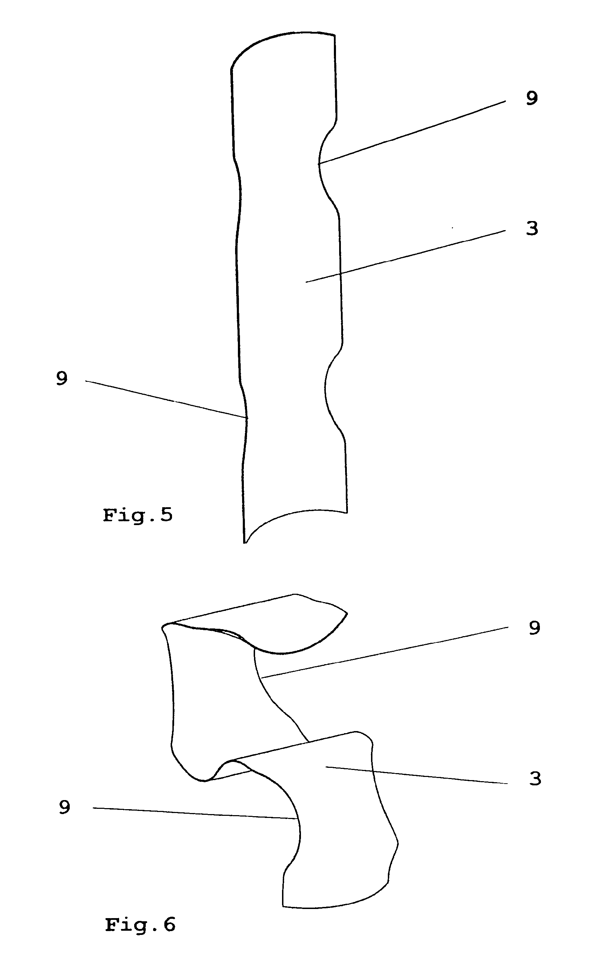

In Fig. 5 ist ein einzelnes langes Federelement 3 dargestellt, das zwei Taillierungen 9 aufweist.

Fig. 6 zeigt, dass an diesen Taillierungsstellen das Abbiegen des langen streifenförmigen Elementes 3 erfolgt.

Aus der Zeichnung nicht ersichtlich ist, dass die Federelemente mit einer viskoelastischen Schicht überzogen sind, um eine Dämpfung beim Streckvorgang der Federelemente 3, 4 zu erreichen.

### Bezugszeichenliste

- 1: oberes Befestigungselement
- 2: unteres Befestigungselement
- 3: langes Federelement
- 4: kurzes Federelement
- 5: Führungsteil
- 6: Befestigungsteil
- 7: Führungsplatte
- 8: Durchgang
- 9: Taillierung

## Patentansprüche

1. Selbst verriegelnde Gelenkvorrichtung, bestehend aus abstandsweise zueinander ausgebildeten Befestigungselementen, die mit dazwischen angeordneten streifenförmigen Federelementen verbunden sind, wobei in der Ausgangsstellung die Federelemente aus der Vertikalen oder Horizontalen abgebogen sind und in Endstellung gestreckt ausgebildet sind, **dadurch gekennzeichnet, dass** zwischen den Befestigungselementen (1, 2) zwei streifenförmige Federelemente (3, 4) unterschiedlicher Länge abstandsweise parallel gegenüberliegend, wenigstens ein Führungsteil (5) zur Führung und seitlichen Fixierung des längeren Federelementes (3) in eine S-förmig abgebogene Ausgangsstellung und zur Befestigung und Abstandsüberbrückung für das kürzere Federelement (4) angeordnet sind.

2. Selbst verriegelnde Gelenkvorrichtung nach Anspruch 1, **dadurch gekennzeichnet, dass** zur weiteren Abstandsüberbrückung für das kürzere Federelement (4) ein Befestigungsteil (6) am oberen Befestigungselement (1) angeordnet ist.

3. Selbst verriegelnde Gelenkvorrichtung nach Anspruch 1, **dadurch gekennzeichnet, dass** zwischen den Befestigungselementen (1, 2) mindestens zwei Federelementpaare (3, 4) mit wenigstens dem zugehörigen Führungsteil (5) aneinandergereiht angeordnet sind.

4. Selbst verriegelnde Gelenkvorrichtung nach Anspruch 1 bis 3, **dadurch gekennzeichnet, dass** die Federelemente (3, 4) aus einem Kohlefaserwerkstoff hergestellt sind.

5. Selbst verriegelnde Gelenkvorrichtung nach Anspruch 1 und wenigstens einem der Ansprüche 2 bis 4, **dadurch gekennzeichnet, dass** sie in der Raumfahrttechnik für entfaltbare Satellitenstrukturen eingesetzt wird.

6. Selbst verriegelnde Gelenkvorrichtung nach Anspruch 1 und wenigstens einem der Ansprüche 2 bis 5, **dadurch gekennzeichnet, dass** sich das lange Federelement (3) beim Abbiegen unter dem kurzen Federelement (4) zwischen seitlichen Führungsplatten (7) des Führungsteils (5) in die S-förmige Doppelbiegung formt und das kurze Federelement (4) um circa 90° abgebogen ist.

7. Selbst verriegelnde Gelenkvorrichtung nach Anspruch 1 und wenigstens einem der Ansprüche 2 bis 6, **dadurch gekennzeichnet, dass** die streifenförmigen Federelemente (3, 4) einen gekrümmten Querschnitt aufweisen.

8. Selbst verriegelnde Gelenkvorrichtung nach Anspruch 1 und wenigstens einem der Ansprüche 2 bis 7, **dadurch gekennzeichnet, dass** das lange Federelement (3) wenigstens in einem vorgegebenen Abschnitt einen geringeren Querschnitt, in Form einer Taillierung (9), aufweist.

9. Selbst verriegelnde Gelenkvorrichtung nach Anspruch 1 und wenigstens einem der Ansprüche 2 bis 8, **dadurch gekennzeichnet, dass** die Federelemente (3, 4) mit einer viskoelastischen Schicht versehen sind.
